# EUROPÄISCHE PATENTSCHRIFT

(11) **EP 4 017 769 B1**
(45) Veröffentlichungstag und Bekanntmachung des Hinweises auf die Patenterteilung: **22.01.2025**
(21) Anmeldenummer: 20732854.3
(22) Anmeldetag: 12.06.2020
(51) Int. Cl.: B60S 1/52, B60S 1/38, B60S 1/40

(54) **WISCHERVORRICHTUNG UND SCHEIBENWISCHERSYSTEM MIT ZUMINDEST EINER WISCHERVORRICHTUNG**
WIPER DEVICE AND WINDSCREEN WIPER SYSTEM HAVING AT LEAST ONE WIPER DEVICE
DISPOSITIF D'ESSUIE-GLACE ET SYSTÈME D'ESSUIE-GLACE DE PARE-BRISE AYANT AU MOINS UN DISPOSITIF D'ESSUIE-GLACE

(30) Priorität: 22.08.2019 DE 102019212549
(43) Veröffentlichungstag der Anmeldung: 29.06.2022
(73) Patentinhaber: Robert Bosch GmbH, 70442 Stuttgart (DE)
(72) Erfinder: KRAEMER, Godelieve, 76549 Huegelsheim (DE)
(86) Internationale Anmeldenummer: PCT/EP2020/066286
(87) Internationale Veröffentlichungsnummer: WO 2021/032336

(56) Entgegenhaltungen:
- EP-A1- 3 231 673
- EP-A1- 3 674 150
- WO-A1-2012/031839
- WO-A1-2019/120685
- WO-A1-2020/136123
- DE-A1- 102005 060 617
- DE-A1- 102009 043 694

## Beschreibung

### Stand der Technik

Es ist bereits eine Wischervorrichtung, insbesondere Scheibenwischervorrichtung, mit einem Wischarmadapter, mit einem Wischblattadapter, der entlang einer Schwenkachse des Wischarmadapters mit dem Wischarmadapter koppelbar ist, und mit zumindest einer elektrischen und/oder fluidischen Querverbindungseinheit, die durch eine Schwenkbewegung des Wischblattadapters relativ zum Wischarmadapter um die Schwenkachse verbindbar oder trennbar ist, vorgeschlagen worden. WO-A-2019/120685 offenbart den Oberbegriff des Anspruchs 1.

### Offenbarung der Erfindung

Die Erfindung wird durch die Ansprüche definiert. Die Erfindung geht aus von einer Wischervorrichtung, insbesondere von einer Scheibenwischervorrichtung, mit einem Wischarmadapter, mit einem Wischblattadapter, der entlang einer Schwenkachse des Wischarmadapters mit dem Wischarmadapter koppelbar ist, und mit zumindest einer elektrischen Axialverbindungseinheit, die durch eine Translationsbewegung des Wischblattadapters relativ zum Wischarmadapter, insbesondere entlang der oder parallel zur Schwenkachse verbindbar oder trennbar ist.

Es wird vorgeschlagen, dass die Wischervorrichtung zumindest eine fluidische Querverbindungseinheit, die durch eine Schwenkbewegung des Wischblattadapters relativ zum Wischarmadapter um die Schwenkachse verbindbar oder trennbar ist.

Vorzugsweise weist die elektrische Axialverbindungseinheit zumindest zwei Axialverbindungselemente auf. Insbesondere weist die elektrische Axialverbindungseinheit zumindest ein erstes Axialverbindungselement und zumindest ein weiteres Axialverbindungselement auf. Bevorzugt weist die fluidische Querverbindungseinheit zumindest zwei Querverbindungselemente auf. Des Weiteren weist die fluidische Querverbindungseinheit zumindest ein erstes Querverbindungselement und zumindest ein weiteres Querverbindungselement auf.

Ferner weist die Wischervorrichtung insbesondere eine elektrische Leitungseinheit auf. Bevorzugt ist die elektrische Leitungseinheit dazu vorgesehen, einen elektrischen Strom und/oder eine elektrische Spannung von einer elektrischen Stromquelle und/oder elektrischen Spannungsquelle zu einem Verbraucher zu leiten und/oder zu übertragen. Die elektrische Leitungseinheit weist vorzugsweise zumindest zwei Kabelelemente auf. Bevorzugt weist die Leitungseinheit zumindest ein erstes Kabelelement und zumindest ein weiteres Kabelelement auf. Das zumindest eine erste Kabelelement ist an dem Wischarmadapter und/oder einem Wischarm angeordnet und/oder geführt. Das zumindest eine weitere Kabelelement ist an dem Wischblattadapter und/oder einem Wischblatt angeordnet und/oder geführt. Insbesondere weist die Axialverbindungseinheit jeweils zumindest zwei als Kontaktelemente ausgebildete Axialverbindungselemente auf. Bevorzugt weist die elektrische Axialverbindungseinheit zumindest ein erstes Kontaktelement und zumindest ein weiteres Kontaktelement auf. Bevorzugt sind die zumindest zwei Kontaktelemente dazu vorgesehen, die zumindest zwei Kabelelemente elektrisch zu verbinden. Besonders bevorzugt ist das zumindest eine erste Kontaktelement mit dem zumindest einen ersten Kabelelement elektrisch gekoppelt. Vorzugsweise sind die zumindest zwei Kontaktelemente wenigstens zu einem Großteil als ein elektrischer Leiter ausgebildet. Die zumindest zwei Kontaktelemente sind vorzugsweise wenigstens zu einem Großteil aus Metall ausgebildet. Alternativ ist auch denkbar, die zumindest zwei Kontaktelemente wenigstens zu einem Großteil aus Graphen, Graphit und/oder zumindest einem Halbleiterelement auszubilden. Insbesondere sind die zumindest zwei Kontaktelemente zu einer lösbaren elektrischen Verbindung vorgesehen. Vorzugsweise sind die zumindest zwei Kontaktelemente zumindest als ein Teil einer elektrischen Steckverbindung ausgebildet. Insbesondere ist das zumindest eine erste Kontaktelement als Kontaktstift ausgebildet. Bevorzugt ist das zumindest eine weitere Kontaktelement als Kontaktbuchse ausgebildet. Insbesondere ist die Kontaktbuchse zu einer Aufnahme des Kontaktstifts ausgebildet. Vorzugsweise ist die Kontaktbuchse dazu vorgesehen, den Kontaktstift in einem verbundenen Zustand geklemmt aufzunehmen. Alternativ kann das zumindest eine erste Kontaktelement als Kontaktbuchse und/oder das zumindest eine weitere Kontaktelement als Kontaktstift ausgebildet sein. Ferner ist die elektrische Axialverbindungseinheit besonders bevorzugt dazu vorgesehen, die elektrische Verbindung gegenüber einer äußeren Umgebung elektrisch zu isolieren. Insbesondere weist die elektrische Verbindungseinheit zumindest ein elektrisches Isolationselement auf.

Des Weiteren weist die Wischervorrichtung insbesondere eine fluidische Leitungseinheit auf. Bevorzugt ist die fluidische Leitungseinheit dazu vorgesehen, ein Fluid, insbesondere Wischwasser, von einem Fluidbehälter zu einer Sprühdüse zu leiten. Die fluidische Leitungseinheit weist vorzugsweise zumindest zwei Kanalelemente auf. Insbesondere weist die fluidische Leitungseinheit zumindest ein erstes Kanalelement und zumindest ein weiteres Kanalelement auf. Das zumindest eine erste Kanalelement ist an dem Wischarmadapter und/oder dem Wischarm angeordnet und/oder geführt. Das zumindest eine weitere Kanalelement ist an dem Wischblattadapter und/oder dem Wischblatt angeordnet und/oder geführt. Die zumindest zwei Kanalelemente sind vorzugsweise dazu vorgesehen, ein Fluid zu transportieren und/oder zu leiten. Vorzugsweise sind die zumindest zwei Kanalelemente als Rohrleitungen ausgebildet. Insbesondere weist die Querverbindungseinheit jeweils zumindest zwei als Fluidverbindungselemente ausgebildete Verbindungselemente, insbesondere Querverbindungselemente, auf. Vorzugsweise weist die fluidische Querverbindungseinheit zumindest ein erstes Fluidverbindungselement und zumindest ein weiteres Fluidverbindungselement auf. Die fluidische Querverbindungseinheit ist bevorzugt dazu vorgesehen, die zumindest zwei Kanalelemente fluidisch miteinander zu verbinden. Vorzugsweise weist zumindest eines der zumindest zwei Fluidverbindungselemente eine fluidisch leitende Kopplung mit zumindest einem der zumindest zwei Kanalelemente auf. Insbesondere sind die zumindest zwei Fluidverbindungselemente zu einer lösbaren fluidischen Verbindung vorgesehen. Vorzugsweise sind die zumindest zwei Fluidverbindungselemente zumindest als ein Teil einer fluidischen Steckkopplung ausgebildet. Insbesondere ist das zumindest eine erste Fluidverbindungselement als Stecker ausgebildet. Bevorzugt ist das zumindest eine weitere Kontaktelement als Muffe ausgebildet. Insbesondere ist die Muffe zu einer Aufnahme des Steckers ausgebildet. Vorzugsweise ist die Muffe dazu vorgesehen, den Stecker in einem verbundenen Zustand geklemmt aufzunehmen. Alternativ kann das zumindest eine erste Fluidverbindungselement als Muffe und/oder das zumindest eine weitere Fluidverbindungselement als Stecker ausgebildet sein. Ferner ist die fluidische Querverbindungseinheit dazu vorgesehen, die fluidisch leitende Verbindung gegenüber einer äußeren Umgebung fluidisch abzudichten. Insbesondere weist die fluidische Querverbindungseinheit zumindest ein fluidisches Dichtelement auf. Nach der Erfindung ist die Axialverbindungseinheit als elektrische Axialverbindungseinheit und die Querverbindungseinheit als fluidische Querverbindungseinheit ausgebildet.

Vorzugsweise verläuft die Schwenkachse zumindest im Wesentlichen senkrecht zu einer Haupterstreckungsachse des Wischarmadapters. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Insbesondere sind die zumindest zwei Querverbindungselemente der fluidischen Querverbindungseinheit dazu vorgesehen, in einer Richtung quer zu der Schwenkachse miteinander verbunden, getrennt, gekoppelt und/oder entkoppelt zu werden. Vorzugsweise ist das zumindest eine erste Querverbindungselement dazu vorgesehen, in einer Richtung zumindest im Wesentlichen senkrecht zu einer Haupterstreckungsachse des Wischarmadapters und/oder des Wischarms mit dem zumindest einen weiteren Querverbindungselement verbunden, getrennt, gekoppelt und/oder entkoppelt zu werden. Besonders bevorzugt sind die zumindest zwei Querverbindungselemente dazu vorgesehen, in einer Schwenkbewegung um die Schwenkachse gekoppelt und/oder entkoppelt zu werden. Insbesondere ist eine Kopplung und/oder Entkopplung der zumindest zwei Querverbindungselemente zu einer Verbindung und/oder Trennung einer fluidischen Querverbindung vorgesehen. Vorzugsweise sind die zumindest zwei Querverbindungselemente in einem montierten Zustand dazu vorgesehen, in einer Richtung quer zu der Schwenkachse einen fluidischen Kontakt zu verbinden und/oder zu trennen.

Ferner weist der Wischarmadapter zumindest ein Wischarmadapterelement auf.

Das zumindest eine Wischarmadapterelement ist vorzugsweise zumindest im Wesentlichen zylindrisch ausgebildet. Bevorzugt ist das zumindest eine Wischarmadapterelement als ein Lagerbolzen ausgebildet. Vorzugsweise weist das Wischblattadapterelement eine Haupterstreckungsachse auf, die zumindest im Wesentlichen konzentrisch zu der Schwenkachse verläuft. Unter einer "Haupterstreckungsachse" eines Objekts soll insbesondere eine Achse verstanden werden, welche parallel zu einer längsten Kante eines kleinsten geometrischen Quaders verläuft, welcher das Objekt gerade noch vollständig umschließt. Vorzugsweise verläuft die Haupterstreckungsachse durch einen geometrischen Mittelpunkt, entlang oder zumindest im Wesentlichen parallel zu einer geometrischen Mittelachse und/oder einem Masseschwerpunkt des Objekts. Vorzugsweise bildet die Haupterstreckungsachse des zumindest einen Wischarmadapterelements die Schwenkachse. Bevorzugt ist die Haupterstreckungsachse des Wischarmadapterelements zumindest im Wesentlichen senkrecht zu einer Haupterstreckungsachse des Wischarmadapters und/oder des Wischarms. Insbesondere weist der Wischblattadapter zumindest einen Koppelbereich auf. Vorzugsweise ist der Koppelbereich dazu vorgesehen, das zumindest eine Wischarmadapterelement aufzunehmen und/oder zu lagern. Bevorzugt weist der Koppelbereich eine Haupterstreckungsachse auf. Die Haupterstreckungsachse des Wischarmadapterelements ist bevorzugt dazu vorgesehen, bei einer Kopplung des Wischarmadapterelements mit dem Koppelbereich des Wischblattadapters entlang der Haupterstreckungsachse des Koppelbereichs mit dem Koppelbereich bewegt zu werden. Des Weiteren ist der Koppelbereich des Wischblattadapters insbesondere dazu vorgesehen, das zumindest eine Wischarmadapterelement schwenkbar um die Schwenkachse zu lagern.

Insbesondere sind die zumindest zwei Axialverbindungselemente der elektrischen Axialverbindungseinheit dazu vorgesehen, in einer Richtung zumindest im Wesentlichen parallel zu der Schwenkachse miteinander verbunden, getrennt, gekoppelt und/oder entkoppelt zu werden. Vorzugsweise ist das zumindest eine erste Axialverbindungselement dazu vorgesehen, in einer Richtung zumindest im Wesentlichen senkrecht zu der Haupterstreckungsachse des Wischarmadapters und/oder des Wischarms mit dem zumindest einen weiteren Axialverbindungselement verbunden, getrennt, gekoppelt und/oder entkoppelt zu werden. Besonders bevorzugt sind die zumindest zwei Axialverbindungselemente dazu vorgesehen, in einer Schwenkbewegung um die Schwenkachse gekoppelt und/oder entkoppelt zu werden. Insbesondere ist eine Kopplung und/oder Entkopplung der zumindest zwei Axialverbindungselemente zu einer Verbindung und/oder Trennung einer elektrischen Axialverbindung vorgesehen. Vorzugsweise sind die zumindest zwei Axialverbindungselemente in einem montierten Zustand dazu vorgesehen, in einer Richtung zumindest im Wesentlichen parallel zu der Schwenkachse einen elektrischen Kontakt zu verbinden und/oder zu trennen. Bevorzugt ist das zumindest eine erste Axialverbindungselement an dem zumindest einen Wischarmadapterelement angeordnet. Besonders bevorzugt ist das zumindest eine weitere Axialverbindungselement an dem Koppelbereich angeordnet. Alternativ ist auch eine umgekehrte Anordnung denkbar.

Durch die erfindungsgemäße Ausgestaltung kann eine Betriebssicherheit und/oder ein defektbedingtes Ausfallrisiko klein gehalten werden. Es kann eine räumliche Trennung zwischen einer elektrischen und einer fluidischen Verbindung erreicht werden. Ein Risiko eines Fluidübertrags von der fluidischen Verbindung zu der elektrischen Verbindung kann vorteilhaft klein gehalten werden. Ferner kann eine Anzahl an Montageschritten besonders vorteilhaft gering gehalten werden. Es kann vorteilhaft eine Montagezeit klein gehalten werden. Des Weiteren kann vorteilhaft eine besonders einfache und/oder schnelle Montage bereitgestellt werden. Ferner kann eine besonders vorteilhaft bauraumsparende Wischervorrichtung bereitgestellt werden. Ein Luftwiderstand kann zudem vorteilhaft gering gehalten werden.

Des Weiteren wird vorgeschlagen, dass die zumindest eine Querverbindungseinheit eine Querverbindungsachse aufweist, die sich quer zu einer Axialverbindungsachse der zumindest einen Axialverbindungseinheit erstreckt. Vorzugsweise ist die Querverbindungsachse oder die Axialverbindungsachse zumindest im Wesentlichen parallel zu einer Richtung, die jeweils dazu vorgesehen ist, zumindest zwei Querverbindungselemente der Querverbindungseinheit oder zumindest zwei Axialverbindungselemente der Axialverbindungseinheit zu verbinden und/oder zu trennen. Insbesondere sind die zumindest zwei Querverbindungselemente oder zumindest zwei Axialverbindungselemente jeweils dazu vorgesehen, entlang und/oder parallel zu der Querverbindungsachse und/oder der Axialverbindungsachse eine elektrische und/oder fluidische Verbindung zu erstellen und/oder zu trennen. Bevorzugt ist die Querverbindungsachse oder die Axialverbindungsachse jeweils zumindest im Wesentlichen parallel zu der Querverbindungseinheit oder der Axialverbindungseinheit. Besonders bevorzugt ist das zumindest eine erste Axialverbindungselement oder das zumindest eine erste Querverbindungselement jeweils dazu vorgesehen, entlang und/oder parallel zu der Querverbindungsachse oder der Axialverbindungsachse mit dem zumindest einen weiteren Axialverbindungselement oder dem zumindest einen weiteren Querverbindungselement gekoppelt zu werden. Vorzugsweise ist die Axialverbindungsachse zumindest im Wesentlichen parallel zu der Schwenkachse. Bevorzugt ist die Querverbindungsachse zumindest im Wesentlichen senkrecht zu der Haupterstreckungsachse des Wischarmadapters. Besonders bevorzugt erstreckt sich die Haupterstreckungsachse des Wischarmadapters quer zu der Schwenkachse. Durch die erfindungsgemäße Ausgestaltung der Wischervorrichtung kann die Querverbindungseinheit vorteilhaft unabhängig von der Axialverbindungseinheit getrennt und/oder verbunden werden. Es kann vorteilhaft eine Trennung und/oder Verbindung einer elektrischen Verbindung und eine Trennung und/oder Verbindung einer fluidischen Verbindung vorteilhaft betriebssicher räumlich und/oder zeitlich voneinander beabstandet und/oder getrennt durchgeführt werden. Es kann bei einem Defekt einer Isolation und/oder Dichtung einer der elektrischen und/oder fluidischen Verbindungen ein Ausfall und/oder eine Beschädigung einer weiteren elektrischen und/oder fluidischen Verbindung weitestgehend verhindert werden. Ferner können Montageschritte vorteilhaft kombiniert werden. Es kann vorteilhaft eine Kopplung und/oder Entkopplung des Wischarmadapters mit dem Wischblattadapter mit einer Verbindung und/oder Trennung einer elektrischen und/oder fluidischen Verbindung kombiniert werden. Es kann vorteilhaft eine schnelle Montage bereitgestellt werden.

Ferner wird vorgeschlagen, dass die zumindest eine Axialverbindungseinheit zumindest zwei Axialverbindungselemente, insbesondere die zumindest zwei vorhergenannten Axialverbindungselemente aufweist, die in einem verbundenen Zustand schwenkbar zueinander gelagert sind. Insbesondere sind die zumindest zwei Axialverbindungselemente schwenkbar um die Schwenkachse gelagert. Vorzugsweise ist die Axialverbindungseinheit als ein Gelenk ausgebildet. Insbesondere ist die Axialverbindungseinheit zumindest teilweise als ein Kugelgelenk, Ellipsoidgelenk, Eigelenk, Zylindergelenk und/oder Zapfengelenk ausgebildet. Besonders ist das Gelenk dazu vorgesehen, zumindest im Wesentlichen parallel zu der Schwenkachse gekoppelt und/oder entkoppelt zu werden. Insbesondere ist eine Kopplung und/oder Entkopplung des Gelenks zu einer Verbindung und/oder Trennung einer elektrischen Axialverbindung vorgesehen. Vorzugsweise verläuft eine Lagerachse der Axialverbindungseinheit zumindest im Wesentlichen parallel zu der Schwenkachse. Vorzugsweise sind die zumindest zwei Axialverbindungselemente in einem verbundenen Zustand lösbar miteinander gekoppelt. Eine lösbare Kopplung ist zerstörungsfrei trennbar ausgebildet. Insbesondere ist das Gelenk lösbar koppelbar. Vorzugsweise ist die lösbare Kopplung in einem gekoppelten Zustand dazu vorgesehen, eine Bewegung der zumindest zwei Axialverbindungselemente relativ zueinander entlang der Axialverbindungsachse zu verhindern. Insbesondere ist eine Kopplung und/oder Entkopplung der zumindest teilweise als Gelenk ausgebildeten Axialverbindungseinheit dazu vorgesehen, die elektrische Axialverbindung zu trennen und/oder zu verbinden. Durch die erfindungsgemäße Ausgestaltung der Wischervorrichtung können elektrische und/oder fluidische Verbindungen vorteilhaft an beweglichen Bauteilen der Wischervorrichtung angeordnet werden. Spannungen und/oder von außen wirkende Kräfte können vorteilhaft aufgenommen, abgeleitet und/oder kompensiert werden. Eine Lebensdauer, eine Zuverlässigkeit und/oder eine Betriebssicherheit können vorteilhaft groß gehalten werden. Ein Verschleiß und/oder eine Ausfallwahrscheinlichkeit kann vorteilhaft klein gehalten werden. Es kann ferner eine Verbindung vorteilhaft mit Bauteilen der Wischervorrichtung kombiniert werden. Es kann besonders vorteilhaft ein Bauraum klein gehalten werden.

Es wird des Weiteren vorgeschlagen, dass die Axialverbindungseinheit zumindest zwei Axialverbindungselemente, insbesondere die vorhergenannten Axialverbindungselemente, aufweist, die in einem verbundenen Zustand, insbesondere dem vorhergenannten verbundenen Zustand der Axialverbindungseinheit, unabhängig von der Schwenkbewegung des Wischblattadapters relativ zum Wischarmadapter um die Schwenkachse einen elektrisch und/oder einen fluidisch leitenden Kontakt aufweisen. Vorzugsweise weisen der Wischblattadapter und der Wischarmadapter einen vorzugsweise beschränkten, maximalen Schwenkbereich um die gemeinsame Schwenkachse auf. Bevorzugt sind die zumindest zwei Kontaktelemente der Axialverbindungseinheit in dem verbundenen Zustand relativ zueinander schwenkbar um die Schwenkachse gelagert. Besonders bevorzugt sind die zumindest zwei Kontaktelemente der Axialverbindungseinheit, insbesondere in einem elektrisch leitenden Zustand, schwenkbar entlang eines Schwenkbereichs gelagert. Vorzugsweise entspricht der Schwenkbereich der Axialverbindungseinheit zumindest dem maximalen Schwenkbereich des Wischarmadapters und des Wischblattadapters. Die zumindest zwei Kontaktelemente der Axialverbindungseinheit sind in dem verbundenen Zustand vorzugsweise dazu vorgesehen, bei der Schwenkbewegung zumindest über den maximalen Schwenkbereich des Wischarmadapters und des Wischblattadapters unterbrechungsfrei den elektrisch leitenden Kontakt aufzuweisen. Vorzugsweise weisen die zumindest zwei Kontaktelemente der Axialverbindungseinheit unabhängig von einer relativen Schwenkstellung innerhalb des maximalen Schwenkbereichs zueinander den elektrisch leitenden Kontakt auf. Durch die erfindungsgemäße Ausgestaltung der Wischervorrichtung kann ein elektrischer Kontakt vorteilhaft zuverlässig und/oder unabhängig von einer Relativbewegung des Wischarmadapters zu dem Wischblattadapters in einem verbundenen Zustand erhalten werden. Es kann besonders vorteilhaft eine räumlich und/oder zeitlich voneinander beabstandete Trennung und/oder Verbindung der Axialverbindungseinheit und der Querverbindungseinheit erreicht werden. Besonders vorteilhaft kann ein Ausfallrisiko einer Verbindung durch einen Defekt einer anderen Verbindung vorteilhaft klein gehalten werden. Eine Betriebssicherheit kann vorteilhaft groß gehalten werden. Ferner kann vorteilhaft eine sichere Montage mit geringen gesundheitlichen Gefahren für einen Monteur bereitgestellt werden. Es kann ein vorteilhaft montagefehlerarmer Montageablauf vorgegeben werden.

Es wird ferner vorgeschlagen, dass die zumindest eine Axialverbindungseinheit zumindest ein Schleifkontaktelement aufweist. Insbesondere bildet das zumindest eine erste Kontaktelement zumindest teilweise das zumindest eine Schleifkontaktelement aus. Bevorzugt ist das zumindest eine weitere Kontaktelement der Axialverbindungseinheit zumindest teilweise als ein stromführender Leiter ausgebildet. Besonders bevorzugt ist das zumindest eine weitere Kontaktelement an zumindest einem Teil einer Stirnseite und/oder einem Teil einer Umfangsfläche des zumindest einen Axialverbindungselements angeordnet. Bevorzugt weist das zumindest eine weitere Kontaktelement, insbesondere in einem montierten und verbundenen Zustand, einen elektrischen Kontakt, vorzugsweise entlang des Schwenkbereichs der Axialverbindungseinheit, mit dem zumindest einen weiteren Axialverbindungselement auf. Insbesondere weist die elektrische Axialverbindungseinheit zumindest ein Federelement auf. Unter einem "Federelement" soll insbesondere ein makroskopisches Element verstanden werden, das zumindest eine Erstreckung aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 3 mm und vorzugsweise von mindestens 5 mm verstanden werden. Vorzugsweise ist das zumindest eine Federelement in dem verbundenen Zustand der Axialverbindungseinheit dazu vorgesehen, eine Kontaktkraft auf und/oder über den zumindest einen Schleifkontakt auszuüben. Bevorzugt ist das Federelement in dem verbundenen Zustand der Axialverbindungseinheit dazu vorgesehen, insbesondere mittels der Kontaktkraft, das zumindest eine Schleifkontaktelement mit dem zumindest einen weiteren Kontaktelement zu kontaktieren. Bevorzugt ist das zumindest eine Schleifkontaktelement einstückig mit dem Federelement ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Insbesondere ist das Schleifkontaktelement als eine Schleifplatte, ein Schleifbalken und/oder ein Schleifpin ausgebildet. Alternativ ist denkbar, dass das Schleifkontaktelement als eine Bürste ausgebildet ist. Vorzugsweise ist das zumindest eine weitere Kontaktelement als eine Kontaktplatte, Leiterbahn, Leiterstrecke und/oder Leitungsnut ausgebildet. Durch die erfindungsgemäße Ausgestaltung kann vorteilhaft ein Bauraum der Axialverbindungseinheit klein gehalten werden. Es kann vorteilhaft eine elektrisch leitende Verbindung an einem ungenutzten Bauraumbereich platziert werden. Es können vorteilhaft Montagefehler vermieden werden und/oder ein Montageaufwand vorteilhaft klein gehalten werden. Des Weiteren kann eine vorteilhaft betriebssichere und/oder unabhängig von einer Schwenkbewegung, insbesondere des Wischarmadapters zu dem Wischblattadapter, elektrisch leitende Verbindung bereitgestellt werden.

Ferner wird vorgeschlagen, dass die zumindest eine Axialverbindungseinheit zumindest zwei Induktionselemente zu einer drahtlosen elektrischen Verbindung aufweist. Insbesondere weist die Wischervorrichtung eine Elektronikeinheit auf. Die Elektronikeinheit weist insbesondere zumindest ein Transformatorelement auf. Das Transformatorelement ist vorzugsweise dazu vorgesehen, eine Wechselspannung und/oder einen Wechselstrom auszugeben. Bevorzugt sind die zumindest zwei Induktionselemente dazu vorgesehen, eine elektrische Energie von dem zumindest einen ersten Kabelelement auf das zumindest eine weitere Kabelelement, insbesondere drahtlos zu übertragen. Besonders bevorzugt sind in dem verbundenen Zustand der Axialverbindungseinheit zumindest zwei Induktionselemente jeweils mit zumindest einem der zumindest zwei Kabelelemente elektrisch verbunden. Die zumindest zwei Induktionselemente sind vorzugsweise wenigstens zu einem Großteil aus Metall ausgebildet. Alternativ ist auch denkbar, die zumindest zwei Induktionselemente wenigstens zu einem Großteil aus Graphen, Graphit und/oder zumindest einem Halbleiterelement auszubilden. Besonders bevorzugt sind die zumindest zwei Induktionselemente wenigstens zu einem Großteil von einem elektrisch isolierenden Material umschlossen. Vorzugsweise weist zumindest ein erstes Induktionselement der zumindest zwei Induktionselemente eine elektrische Verbindung mit dem zumindest einen Transformatorelement der Elektronikeinheit auf. Insbesondere ist das zumindest eine erste Induktionselement dazu vorgesehen, eine elektromagnetische Strahlung auszusenden. Besonders bevorzugt ist das zumindest eine erste Induktionselement als eine Spule ausgebildet. Das zumindest eine erste Induktionselement ist vorzugsweise dazu vorgesehen, ein elektromagnetisches Wechselfeld zu erzeugen. Des Weiteren ist insbesondere zumindest ein weiteres Induktionselement der zumindest zwei Induktionselemente dazu vorgesehen, die von dem zumindest einen Induktionselement ausgesandte elektromagnetische Strahlung zu empfangen. Bevorzugt ist das zumindest eine weitere Induktionselement als eine Spule ausgebildet. Besonders bevorzugt sind die zumindest zwei Induktionselemente in dem verbundenen Zustand der Axialverbindungseinheit elektromagnetisch miteinander gekoppelt. Durch die erfindungsgemäße Ausgestaltung der Wischervorrichtung kann eine vorteilhaft hohe Ausnutzung eines Bauraums erreicht werden. Vorteilhaft können die Induktionselemente in vorhandene Bauelemente integriert werden, ohne einen zusätzlichen Bauraum zu beanspruchen. Es kann vorteilhaft ein mechanischer Verschleiß von elektrischen Bauteilen weitestgehend vermieden werden. Ferner können offene elektrische Kontakte vorteilhaft vermieden werden. Besonders vorteilhaft können elektrische Kontakte elektrisch und/oder fluidisch isoliert und/oder abgedichtet werden.

Des Weiteren wird vorgeschlagen, dass die zumindest eine Axialverbindungseinheit zumindest eine Kugelgelenkeinheit aufweist. Insbesondere weist die zumindest eine Kugelgelenkeinheit zumindest zwei Kugelgelenkelemente auf. Bevorzugt weist die zumindest eine Kugelgelenkeinheit zumindest ein erstes Kugelgelenkelement und zumindest ein weiteres Kugelgelenkelement auf. Vorzugsweise ist das zumindest eine erste Kugelgelenkelement als eine Gelenkpfanne ausgebildet. Bevorzugt ist das zumindest eine weitere Kugelgelenkelement als ein Gelenkkopf ausgebildet. Insbesondere ist das zumindest eine erste Kugelgelenkelement dazu vorgesehen, einen größten Umfang des zumindest einen weiteren Kugelgelenkelements wenigstens größtenteils zu umschließen. Unter dem Ausdruck "wenigstens größtenteils" soll hierbei insbesondere zumindest 55 %, vorteilhaft zumindest 65 %, vorzugsweise zumindest 75 %, besonders bevorzugt zumindest 85 % und besonders vorteilhaft zumindest 95 % einer geschlossenen Strecke, insbesondere eines gesamten Umfangs, einer geschlossenen Fläche und/oder eines geschlossenen Volumens verstanden werden. Insbesondere umgreift das zumindest eine erste Kugelgelenkelement zumindest eine Äquatorialebene des zumindest einen weiteren Kugelgelenkelements zumindest teilweise. Bevorzugt umgreift das zumindest eine erste Kugelgelenkelement zumindest einen Bereich oberhalb und unterhalb der Äquatorialebene auf einer Oberfläche des zumindest einen weiteren Kugelgelenkelements zumindest teilweise. Vorzugsweise ist das zumindest eine erste Kugelgelenkelement einteilig mit dem zumindest einen ersten Axialverbindungselement ausgebildet. Bevorzugt ist das zumindest eine weitere Kugelgelenkelement einteilig mit dem zumindest einen weiteren Axialverbindungselement ausgebildet. Besonders bevorzugt ist das zumindest eine Kontaktelement, das zumindest eine Schleifkontaktelement, das zumindest eine Induktionselement einteilig mit dem zumindest einen Kugelgelenkelement ausgebildet. Des Weiteren ist besonders bevorzugt das zumindest eine weitere Kontaktelement, das zumindest eine weitere Induktionselement einteilig mit dem zumindest einen weiteren Kugelgelenkelement ausgebildet. Durch die erfindungsgemäße Ausgestaltung der Wischervorrichtung kann eine vorteilhaft einfache elektrische Verbindung bereitgestellt werden. Es kann besonders vorteilhaft eine vorzugsweise in einem dichten verbundenen Zustand, schwenkbare fluidische Axialverbindungseinheit bereitgestellt werden. Eine vorteilhaft einfache Montierbarkeit kann bereitgestellt werden. Es können Montageschritte vorteilhaft kombiniert werden. Es kann vorteilhaft eine elektrische und/oder fluidische Verbindung gleichzeitig in einem gemeinsamen Montageschritt mit einem ersten und/oder zweiten Kopplungsschritt des Wischarmadapters mit dem Wischblattadapter bereitgestellt werden. Es können vorteilhaft Montagefehler gering gehalten werden und/oder eine Montagearbeit erleichtert werden.

Es wird des Weiteren vorgeschlagen, dass die Axialverbindungseinheit zumindest zwei Axialverbindungselemente, insbesondere die bereits zuvor genannten Axialverbindungselemente, und zumindest ein Koppelelement aufweist, das dazu vorgesehen ist, eines der zumindest zwei Axialverbindungselemente entgegen einer zumindest im Wesentlichen parallel zu der Schwenkachse verlaufenden Translationsbewegung relativ zu einem weiteren der zumindest zwei Axialverbindungselemente, insbesondere unabhängig von der Schwenkbewegung, zu halten. Vorzugsweise ist das zumindest eine erste Axialverbindungselement an dem Wischarmadapter angeordnet. Bevorzugt ist das zumindest eine Koppelelement an dem Wischarmadapter angeordnet. Insbesondere ist das zumindest eine Koppelelement als ein Magnet, als ein Klemmelement und/oder ein Rastelement ausgebildet. Vorzugsweise ist das Rastelement und/oder das Klemmelement als ein Fortsatz und/oder eine Erhebung ausgebildet. Bevorzugt ist das Rastelement und/oder das Klemmelement als ein Bolzen, eine Brücke, als eine Nase, als ein Haken und/oder als ein Rastprofil und/oder Klemmprofil ausgebildet. Besonders bevorzugt weist das Rastprofil und/oder Klemmprofil eine kreisförmige, ellipsenförmige und/oder polygonale Oberflächenkontur auf. Besonders bevorzugt weist das zumindest eine weitere Axialverbindungselement und/oder der Wischblattadapter einen Gegenkoppelbereich auf. Insbesondere ist der Gegenkoppelbereich aus Metall und/oder Eisen ausgebildet und/oder weist einen Rastelementaufnahmebereich und/oder Klemmelementaufnahmebereich auf. Vorzugsweise ist der Gegenkoppelbereich formkorrelierend zu einer Kontur des Magnets, des Klemmelements und/oder des Rastelements ausgebildet. Besonders bevorzugt ist der Gegenkoppelbereich in einem mit dem Koppelelement gekoppelten Zustand dazu vorgesehen, den Magnet, das Klemmelement und/oder das Rastelement in einer Richtung quer zu der Schwenkachse zu führen. Besonders bevorzugt ist das Koppelelement als ein Magnet ausgebildet. Vorzugsweise ist das zumindest eine Koppelelement an dem zumindest einen Wischarmadapterelement des Wischarmadapters angeordnet. Des Weiteren weisen insbesondere das zumindest eine weitere Axialverbindungselement und/oder der Wischblattadapter einen magnetischen und/oder magnetisierbaren Gegenkoppelbereich auf. Bevorzugt ist das zumindest eine weitere Axialverbindungselement an dem Wischblattadapter angeordnet. Vorzugsweise ist das zumindest eine weitere Axialverbindungselement einstückig mit dem Gegenkoppelbereich ausgebildet. Der magnetische und/oder magnetisierbare Gegenkoppelbereich erstreckt sich vorzugsweise zumindest über einen maximalen Schwenkbereich des zumindest einen Koppelelements um die gemeinsame Schwenkachse. Der metallische Gegenkoppelbereich ist insbesondere dazu vorgesehen, das eine der zumindest zwei Axialverbindungselemente entgegen einer zumindest im Wesentlichen parallel zu der Schwenkachse verlaufenden Translationsbewegung relativ zu dem zumindest einen weiteren Axialverbindungselement, insbesondere unabhängig von der Schwenkbewegung, zu halten. Alternativ ist denkbar, dass das zumindest eine Koppelelement zumindest teilweise als der Gelenkkopf und/oder die Gelenkpfanne des Kugelgelenks ausgebildet ist. Durch die erfindungsgemäße Ausgestaltung der Wischervorrichtung kann vorteilhaft eine Trennung der Axialverbindungseinheit bei einer Verbindung der Querverbindungseinheit in der Richtung quer zu der Schwenkachse weitestgehend verhindert werden. Es kann vorteilhaft ein Verschleiß und/oder eine vorschnelle Abnutzung von Bauteilen der Axialverbindungseinheit, des Wischblattadapters und/oder des Wischarmadapters klein gehalten und/oder weitestgehend verhindert werden. Es können vorteilhaft Montageschritte durch den Monteur vorzugsweise aufgrund einer Zwangsstellung des Wischblattadapters zu dem Wischarmadapter, einfach erkannt und/oder ausgeführt werden. Des Weiteren können vorteilhaft fehlerhafte Montageabläufe klein gehalten werden. Ferner kann das Koppelelement vorteilhaft in bestehende Bauteile integriert werden, ohne einen zusätzlichen Bauraum zu beanspruchen. Es kann vorteilhaft eine hohe Bauraumeffizienz erreicht werden.

Es wird ferner vorgeschlagen, dass die Axialverbindungseinheit zumindest ein Axialverbindungselement aufweist, das an einem die Schwenkachse definierenden Schwenklagerelement, insbesondere einem Lagerbolzen, vorzugsweise dem vorhergenannten Lagerbolzen, des Wischarmadapters angeordnet ist, wobei die Querverbindungseinheit zumindest ein Querverbindungselement, insbesondere das zuvor genannte zumindest eine erste Querverbindungselement, aufweist, das in einer Richtung quer zur Schwenkachse an dem Wischarmadapter außerhalb eines Nahbereichs der Schwenkachse angeordnet ist. Bevorzugt bildet das zumindest eine Wischarmadapterelement wenigstens zu einem Großteil das Schwenklagerelement aus. Insbesondere ist das zumindest eine erste Axialverbindungselement an dem zumindest einen Wischarmadapterelement angeordnet. Bevorzugt ist das zumindest eine weitere Axialverbindungselement an dem Koppelbereich des Wischblattadapters angeordnet.

Vorzugsweise ist der Nahbereich der Schwenkachse ein Bereich mit einer maximalen Erstreckung um die Schwenkachse, welcher insbesondere zumindest 30 %, vorzugsweise zumindest 40 %, bevorzugt zumindest 50 % und besonders bevorzugt zumindest 60 % einer maximalen Längserstreckung, vorzugsweise zumindest im Wesentlichen parallel zu der Haupterstreckungsachse, des Wischblattadapters aufweist. Bevorzugt weist die maximale Erstreckung einen Wert aus einem Wertebereich von insbesondere 4 mm bis 30 mm, vorzugsweise von 8 mm bis 25 mm, bevorzugt von 12 mm bis 20 mm und besonders bevorzugt von 15 mm bis 18 mm auf. Durch die erfindungsgemäße Ausgestaltung der Wischervorrichtung kann vorteilhaft eine Kombination von Bauteilen der Wischervorrichtung erreicht werden. Ein Bauraum kann vorteilhaft klein gehalten werden. Des Weiteren können Montageschritte vorteilhaft kombiniert werden. Vorteilhaft kann eine Verbindung und/oder Trennung der Axialverbindungseinheit und/oder der Querverbindungseinheit zu einer elektrischen und/oder fluidischen Verbindung mit Montageschritten zu einer Kopplung und/oder Entkopplung des Wischarmadapters mit dem Wischblattadapter in einem Montageschritt vereint werden. Es kann vorteilhaft eine Montagezeit klein gehalten werden. Des Weiteren kann ein Montageaufwand vorteilhaft reduziert werden.

Außerdem wird ein Wischblattadapter, insbesondere der vorhergenannte Wischblattadapter mit einer erfindungsgemäßen Wischervorrichtung vorgeschlagen. Insbesondere ist der Wischblattadapter dazu vorgesehen, das Wischblatt aufzunehmen. Der Wischblattadapter ist insbesondere dazu vorgesehen, das Wischblatt mit dem Wischarm zu koppeln. Vorzugsweise ist der Wischblattadapter dazu vorgesehen, zumindest einen Abschnitt von zumindest einem der zumindest zwei Kanalelemente zu führen und/oder aufzunehmen. Bevorzugt ist der Wischblattadapter dazu vorgesehen, zumindest einen Abschnitt von zumindest einem der zumindest zwei Kabelelemente zu führen und/oder aufzunehmen. Durch die erfindungsgemäße Ausgestaltung des Wischblattadapters können die Querverbindungseinheit und die Axialverbindungseinheit vorteilhaft räumlich voneinander getrennt platziert werden. Es kann eine vorteilhaft hohe Betriebssicherheit und/oder Zuverlässigkeit der erfindungsgemäßen Ausgestaltung erreicht werden. Vorteilhaft kann zumindest ein Axialverbindungselement und/oder zumindest ein Querverbindungselement mit einem vorhandenen Bauteil des Wischblattadapters kombiniert werden. Es kann besonders vorteilhaft ein Bauraum klein gehalten werden.

Ferner wird außerdem ein Wischarmadapter, insbesondere der vorhergenannte Wischarmadapter, mit einer erfindungsgemäßen Wischervorrichtung vorgeschlagen. Insbesondere ist der Wischarmadapter dazu vorgesehen, das Wischblatt über den Wischblattadapter aufzunehmen. Der Wischarmadapter ist insbesondere dazu vorgesehen, das Wischblatt über den Wischblattadapter mit dem Wischarm zu koppeln. Vorzugsweise ist der Wischarmadapter dazu vorgesehen, zumindest einen Abschnitt von zumindest einem der zumindest zwei Kanalelemente zu führen und/oder aufzunehmen. Bevorzugt ist der Wischarmadapter dazu vorgesehen, zumindest einen Abschnitt von zumindest einem der zumindest zwei Kabelelemente zu führen und/oder aufzunehmen. Durch die erfindungsgemäße Ausgestaltung des Wischarmadapters können die Querverbindungseinheit und die Axialverbindungseinheit vorteilhaft räumlich voneinander getrennt platziert werden. Es kann eine vorteilhaft hohe Betriebssicherheit und/oder Zuverlässigkeit der erfindungsgemäßen Ausgestaltung erreicht werden. Vorteilhaft kann zumindest ein Axialverbindungselement und/oder zumindest ein Querverbindungselement mit einem vorhandenen Bauteil des Wischblattadapters kombiniert werden. Es kann besonders vorteilhaft ein Bauraum klein gehalten werden.

Außerdem wird ein Scheibenwischersystem mit zumindest einem Wischarm, insbesondere dem vorhergenannten Wischarm, mit zumindest einem Wischblatt, insbesondere dem vorhergenannten Wischblatt und mit der erfindungsgemäßen Wischervorrichtung vorgeschlagen. Vorzugsweise weist der Wischarm den Wischarmadapter auf. Bevorzugt weist das Wischblatt den Wischblattadapter auf. Das Scheibenwischersystem ist vorzugsweise dazu vorgesehen, an einem Fahrzeug montiert zu werden. Vorzugsweise ist das Scheibenwischersystem dazu vorgesehen, eine Wischfläche auf einer Fahrzeugscheibe zu reinigen und/oder zu waschen. Insbesondere weist das Scheibenwischersystem eine Sprühvorrichtung zu einer Benetzung der Wischfläche mit Wischwasser auf. Des Weiteren weist das Scheibenwischersystem eine Wischwasserkanaleinheit auf. Die Wischwasserkanaleinheit ist dazu vorgesehen, der Sprühvorrichtung Wischwasser zuzuführen. Vorzugsweise weist das Scheibenwischersystem einen Fluidbehälter zu einer Vorratshaltung des Wischwassers auf. Des Weiteren weist das Scheibenwischersystem bevorzugt zumindest eine Pumpeneinheit auf. Die Pumpeneinheit ist bevorzugt dazu vorgesehen, Wischwasser aus dem Fluidbehälter zu fördern und der Wischwasserkanaleinheit zuzuführen. Vorzugsweise ist die Sprüheinheit mittels der fluidischen Querverbindungseinheit und/oder Axialverbindungseinheit, der Kanaleinheit und der Wischwasserkanaleinheit mit der Pumpeneinheit und mit dem Fluidbehälter fluidisch verbunden. Ferner weist das Scheibenwischersystem insbesondere zumindest eine Heizeinheit auf. Die Heizeinheit ist vorzugsweise dazu vorgesehen, ein Einfrieren des Wischwassers in der Wischwasserkanaleinheit zu verhindern. Vorzugsweise ist die Heizeinheit elektrisch betrieben. Bevorzugt ist die Heizeinheit mittels der elektrischen Querverbindungseinheit und/oder Axialverbindungseinheit und der elektrischen Leitungseinheit mit einer elektrischen Energiequelle verbunden. Durch die erfindungsgemäße Ausgestaltung des Scheibenwischersystems kann eine vorteilhaft einfache und/oder betriebssichere Montage erreicht werden. Es kann eine elektrische Verbindung von einer fluidischen Verbindung vorteilhaft räumlich und/oder zeitlich getrennt werden. Es kann ein Verschleiß und/oder eine vorzeitige Alterung der Bauteile der Axialverbindungseinheit, der Querverbindungseinheit, des Wischarmadapters und/oder des Wischblattadapters besonders vorteilhaft klein gehalten werden. Es können Gefahren einer Kombination von elektrischen und fluidischen Verbindungen besonders vorteilhaft umgangen und/oder klein gehalten werden. Des Weiteren kann eine Teilevielfalt und/oder eine Anzahl an Montageschritten vorteilhaft gering gehalten werden. Ferner kann ein Risiko einer fehlerhaften Montage vorteilhaft gering gehalten werden. Durch eine Kombination von Bauteilen zu einer Montage und/oder Demontage sowie zu einer Verbindung und/oder Trennung einer Verbindung kann ein vorteilhaft geringer Bauraum erreicht werden. Vorteilhaft kann ein Windwiderstand klein gehalten werden.

Die erfindungsgemäße Wischervorrichtung und/oder das erfindungsgemäße Scheibenwischersystem sollen hierbei nicht auf die oben beschriebene Anwendung und Ausführungsform beschränkt sein. Insbesondere können/kann die erfindungsgemäße Wischervorrichtung und/oder das erfindungsgemäße Scheibenwischersystem zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Scheibenwischersystem mit einer erfindungsgemäßen Wischervorrichtung in einem getrennten Zustand des Wischblattadapters und des Wischarmadapters in einer schematischen Darstellung,
- Fig. 2: das erfindungsgemäße Scheibenwischersystem mit der erfindungsgemäßen Wischervorrichtung in einem gekoppelten Zustand des Wischblattadapters und des Wischarmadapters in einer schematischen Darstellung und
- Fig. 3: die erfindungsgemäße Wischervorrichtung in einer Teilschnittdarstellung (III - III) in einem Bereich um die Schwenkachse in einem gekoppelten Zustand des Wischblattadapters mit dem Wischarmadapter mit einer verbundenen Axialverbindungseinheit und einer verbundenen Querverbindungseinheit der Wischervorrichtung in einer schematischen Darstellung.

### Beschreibung der Ausführungsbeispiele

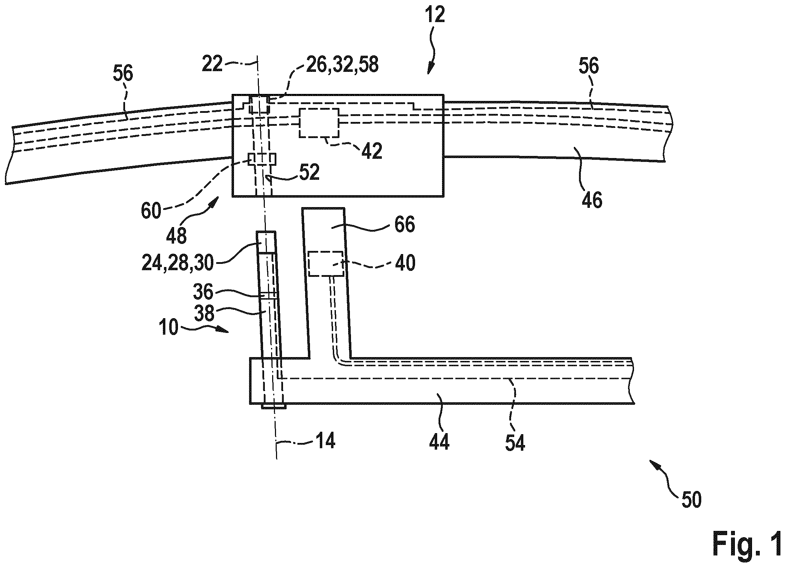

In Figur 1 ist ein Scheibenwischersystem 50 mit einem Wischarm 44, mit einem Wischblatt 46 und mit einer Wischervorrichtung 48 gezeigt. Der Wischarm 44 weist einen Wischarmadapter 10 auf. Das Wischblatt 46 weist einen Wischblattadapter 12 auf. Der Wischarmadapter 10 weist ein Schwenklagerelement 38 auf. Das Schwenklagerelement 38 ist mit einem Wischarmadapterelement einteilig ausgebildet. Das Schwenklagerelement 38 ist als ein Lagerbolzen ausgebildet. Das Schwenklagerelement 38 weist eine Haupterstreckungsachse auf, die im Wesentlichen senkrecht zu einer Haupterstreckungsachse des Wischarms 44 verläuft. Der Wischarm 44 und/oder der Wischarmadapter 10 sind mittels einer Side-Lock-Verbindung mit dem Wischblatt 46 und/oder dem Wischblattadapter 12 koppelbar. Der Wischblattadapter 12 weist eine Lageröffnung 52 zu einer Aufnahme des Lagerbolzens auf. Zu einer Kopplung des Wischarmadapters 10 mit dem Wischblattadapter 12 verläuft die Haupterstreckungsebene des Wischarms 44 quer zu einer Haupterstreckungsebene des Wischblatts 46. Des Weiteren ist das Schwenklagerelement 38 zu einer Kopplung dazu vorgesehen, in einer Translationsbewegung entlang einer Haupterstreckungsachse der Lageröffnung 52 in der Lageröffnung aufgenommen zu werden.

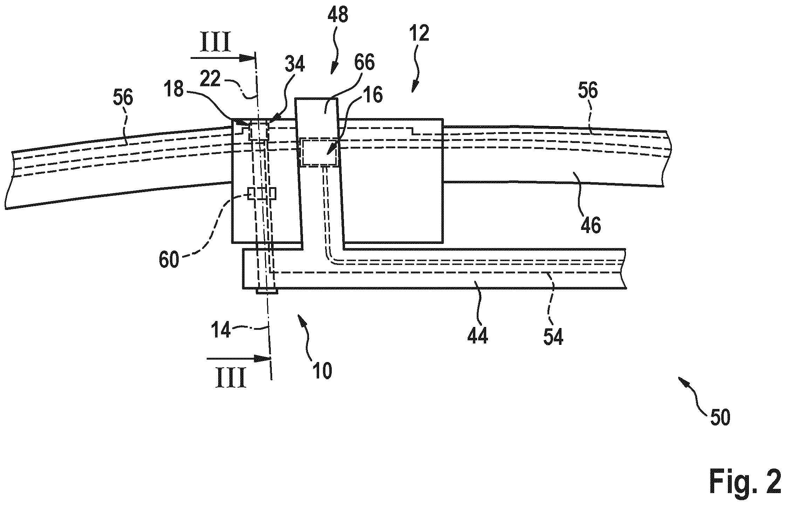

Figur 2 zeigt einen gekoppelten Zustand des Wischarmadapters 10 mit dem Wischblattadapter 12. In dem gekoppelten Zustand des Wischarmadapters 10 mit dem Wischblattadapter 12 ist das Schwenklagerelement 38 schwenkbar in der Lageröffnung 52 aufgenommen. Eine Haupterstreckungsachse des Schwenklagerelements 38 definiert eine Schwenkachse 14. In dem gekoppelten Zustand ist der Wischarmadapter 10 und/oder der Wischarm 44 mit dem Wischblattadapter 12 und/oder dem Wischblatt 46 schwenkbar um die Schwenkachse 14 gelagert. Ferner weist der Wischarmadapter 10 einen Sicherheitsbügel 66 auf. Der Sicherheitsbügel 66 ist dazu vorgesehen, den Wischblattadapter 12 in einem gesicherten gekoppelten Zustand teilweise dreiseitig zu umgreifen. In dem gesicherten gekoppelten Zustand verläuft die Haupterstreckungsachse des Wischblatts 46 und/oder des Wischblattadapters 12 im Wesentlichen parallel zu der Haupterstreckungsachse des Wischarms 44 und/oder des Wischarmadapters 10. Der an dem Wischarmadapter 10 angeordnete Sicherheitsbügel 66 ist dazu vorgesehen, ausgehend von dem gekoppelten Zustand um die Schwenkachse 14 in den gesicherten gekoppelten Zustand geschwenkt zu werden. Der Sicherheitsbügel 66 ist in dem gesicherten gekoppelten Zustand dazu vorgesehen, eine Translationsbewegung des Wischarmadapters 10 relativ zu dem Wischblattadapter 12 formschlüssig zu begrenzen.

Die Wischervorrichtung 48 weist den Wischarmadapter 10 und den Wischblattadapter 12 auf. Ferner weist die Wischervorrichtung 48 eine elektrische Leitungseinheit auf. Die elektrische Leitungseinheit weist zwei Kabelelemente 54, 56 auf. Die elektrische Leitungseinheit weist ein erstes Kabelelement 54 und ein zweites Kabelelement 56 auf. Die zwei Kabelelemente sind dazu vorgesehen, einen nicht näher dargestellten elektrischen Verbraucher mit elektrischer Energie zu versorgen. Das erste Kabelelement 54 ist an dem Wischarm 44 und/oder dem Wischarmadapter 10 angeordnet. Das zweite Kabelelement 56 ist an dem Wischblatt 46 und/oder dem Wischblattadapter 12 angeordnet. Die Wischervorrichtung 48 weist des Weiteren zumindest eine elektrische Axialverbindungseinheit 18 auf, die durch die Translationsbewegung des Wischblattadapters 12 relativ zum Wischarmadapter 10 entlang der Schwenkachse 14 verbindbar oder trennbar ist. Die Axialverbindungseinheit 18 weist zwei Axialverbindungselemente 24, 26 auf, die in einem verbundenen Zustand unabhängig von der Schwenkbewegung des Wischblattadapters 12 relativ zum Wischarmadapter 10 um die Schwenkachse 14 einen elektrisch leitenden Kontakt aufweisen. Die Axialverbindungseinheit 18 weist ein erstes Axialverbindungselement 24 und ein zweites Axialverbindungselement 26 auf. Das erste Axialverbindungselement 24 ist an dem Schwenklagerelement 38 angeordnet. Das zweite Axialverbindungselement 24 ist an der Lageröffnung 52 angeordnet. Des Weiteren weist die Axialverbindungseinheit 18 eine Axialverbindungsachse 22 auf. Die zwei Axialverbindungselemente 24, 26 sind dazu vorgesehen, entlang der Axialverbindungsachse 22 verbunden oder getrennt zu werden. Eine Translationsbewegung des ersten Axialverbindungselements 24 relativ zu dem zweiten Axialverbindungselement 26 entlang der Axialverbindungsachse 22 ist dazu vorgesehen, die zwei Axialverbindungselemente 24, 26 zu verbinden oder zu trennen. Die Axialverbindungsachse 22 verläuft im Wesentlichen parallel zu der Schwenkachse 14. Eine Kopplung des Schwenklagerelements 38 des Wischarmadapters 10 mit der durch den Wischblattadapter 12 begrenzten Lageröffnung 52 ist dazu vorgesehen, das erste Axialverbindungselement 24 und das zweite Axialverbindungselement 26 elektrisch zu verbinden. Des Weiteren weist die Axialverbindungseinheit 18 zwei Kontaktelemente auf. Die zwei Kontaktelemente sind in einem verbundenen Zustand der Axialverbindungseinheit 18 dazu vorgesehen, die zwei Kabelelemente 54, 56 elektrisch miteinander zu verbinden. Die Axialverbindungseinheit 18 weist ein erstes Kontaktelement und ein zweites Kontaktelement auf. Das erste Kontaktelement ist an dem ersten Axialverbindungselement 24 aufgenommen. Die zwei Axialverbindungselemente 24, 26 sind in dem verbundenen Zustand der Axialverbindungseinheit 18 schwenkbar zueinander gelagert. Des Weiteren ist das erste Kontaktelement als ein Schleifkontaktelement 28 ausgebildet. Das zweite Kontaktelement ist an dem zweiten Axialverbindungselement 26 aufgenommen. Des Weiteren ist das zweite Kontaktelement als eine Kontaktplatte 58 ausgebildet. Die Axialverbindungseinheit 18 mit den zwei Axialverbindungselementen 24, 26 weist in dem verbundenen Zustand unabhängig von der Schwenkbewegung des Wischblattadapters 12 relativ zum Wischarmadapter 10 um die Schwenkachse 14 einen elektrisch leitenden Kontakt auf. Das Schleifkontaktelement 28 ist in dem verbundenen Zustand der Axialverbindungseinheit 18 dazu vorgesehen, unabhängig von der Schwenkbewegung des ersten Axialverbindungselements 24 relativ zu dem zweiten Axialverbindungselement 26 in einem elektrischen Kontakt mit dem zweiten Kontaktelement zu stehen. Des Weiteren ist das Schleifkontaktelement 28 in dem verbundenen Zustand der Axialverbindungseinheit 18 dazu vorgesehen, unabhängig von der Schwenkbewegung des ersten Axialverbindungselements 24 relativ zu dem zweiten Axialverbindungselement 26 die zwei Kabelelemente 54, 56 elektrisch zu verbinden. Das Schleifkontaktelement 28 ist dazu vorgesehen, eine Kontaktkraft auf das zweite Kontaktelement auszuüben. Das Schleifkontaktelement 28 ist als ein Federkontaktelement ausgebildet.

Ferner weist die Axialverbindungseinheit 18 mit den zwei Axialverbindungselementen 24, 26 ein Koppelelement 36 auf. Das Koppelelement 36 ist dazu vorgesehen, das erste Axialverbindungselement 24 entgegen der zumindest im Wesentlichen parallel zu der Schwenkachse 14 verlaufenden Translationsbewegung relativ zu dem zweiten Axialverbindungselement 26 unabhängig von der Schwenkbewegung zu halten. Das Koppelelement 36 ist als ein Dauermagnet ausgebildet. Die Axialverbindungseinheit 18 weist des Weiteren einen Gegenkoppelbereich 60 auf. Der Gegenkoppelbereich ist an dem zweiten Axialverbindungselement 26 angeordnet. Der Dauermagnet ist in dem verbundenen Zustand dazu vorgesehen, eine magnetische Haltekraft auf den Gegenkoppelbereich 60 auszuüben. Der Gegenkoppelbereich 60 ist von einem ferromagnetischen Material ausgebildet. Die magnetische Haltekraft ist in dem verbundenen Zustand der Axialverbindungseinheit 18 dazu vorgesehen, zumindest der Kontaktkraft des Schleifkontaktelements 28 auf das zweite Kontaktelement entgegenzuwirken. Des Weiteren weisen das Koppelement 36 und der Gegenkoppelbereich 60 über einen maximalen Schwenkbereich des Wischarmadapters 10 und des Wischblattadapters 12 um die Schwenkachse 14 zumindest die Haltekraft auf.

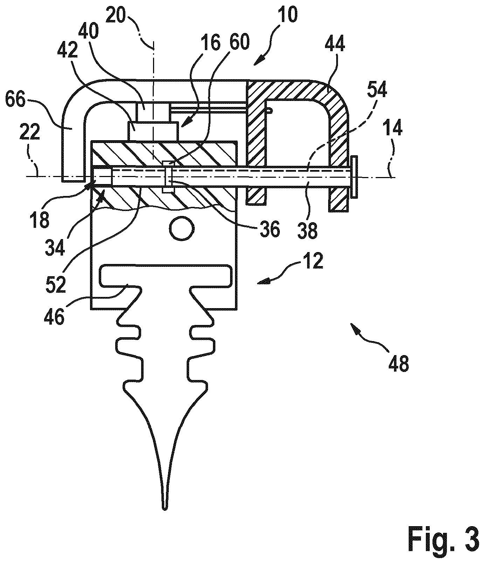

Ferner weist die Wischervorrichtung 48 eine fluidische Querverbindungseinheit 16 auf. Die fluidische Querverbindungseinheit 16 ist dazu vorgesehen, durch die Schwenkbewegung des Wischblattadapters 12 relativ zum Wischarmadapter 10 um die Schwenkachse 14 verbunden oder getrennt zu werden. Die fluidische Querverbindung 16 ist dazu vorgesehen, in der Schwenkbewegung von dem gekoppelten Zustand in den gesicherten gekoppelten Zustand verbunden zu werden. Die Querverbindungseinheit 16 weist zwei Querverbindungselemente 40, 42 auf. Die Querverbindungseinheit 16 weist ein erstes Querverbindungselement 40 und ein zweites Querverbindungselement 42 auf. Des Weiteren ist die Querverbindungseinheit als Kugelgelenk ausgebildet. Das erste Querverbindungselement 40 ist als Kugelgelenkkopf ausgebildet. Das zweite Querverbindungselement 42 ist als Kugelgelenkpfanne ausgebildet. Die Wischervorrichtung weist des Weiteren eine Wischwasserkanaleinheit auf. Die Wischwasserkanaleinheit weist ein erstes Kanalelement und ein zweites Kanalelement auf. Das erste Kanalelement ist teilweise an dem Kugelgelenkkopf angeordnet. Das zweite Kanalelement ist teilweise an der Kugelgelenkpfanne angeordnet. In einem verbundenen Zustand der Querverbindungseinheit 16 sind die zwei Kanalelemente fluidisch miteinander verbunden. Die Querverbindungseinheit 16 ist dazu vorgesehen, entlang einer Querverbindungsachse 20 verbunden zu werden. Figur 3 zeigt, dass die Querverbindungsachse 20 in einem verbundenen Zustand der Querverbindungseinheit 16 senkrecht zu der Schwenkachse 14 verläuft. Des Weiteren verläuft die Querverbindungsachse 20 in dem verbundenen Zustand der Querverbindungseinheit 16 quer zu der Axialverbindungsachse 22 der Axialverbindungseinheit 18. Die Querverbindungsachse 20 verläuft in dem verbundenen Zustand der Querverbindungseinheit 16 im Wesentlichen senkrecht zu der Axialverbindungsachse 22 der Axialverbindungseinheit 18.

Des Weiteren ist das erste Querverbindungselement 40 in einer Richtung quer zur Schwenkachse 14 an dem Wischblattadapter 12 außerhalb eines Nahbereichs der Schwenkachse 14 angeordnet. Das zweite Querverbindungselement 42 ist in einer weiteren Richtung quer zur Schwenkachse 14 an dem Wischarmadapter 10 außerhalb eines Nahbereichs der Schwenkachse 14 angeordnet.

Ein maximaler Abstand des Nahbereichs von der Schwenkachse 14 liegt in einem Wertebereich von 10 mm bis 20 mm. Das erste Querverbindungselement 40 ist an einer dem Wischblattadapter 12 zugewandten Unterseite des Sicherheitsbügels 66 angeordnet. Das zweite Querverbindungselement 42 ist auf einer von dem Sicherheitsbügel 66 umgriffenen Oberfläche des Wischblattadapters 12 angeordnet.

Alternativ wird vorgeschlagen, dass die zumindest eine Axialverbindungseinheit 18 zumindest eine Kugelgelenkeinheit 34 aufweist. Die Kugelgelenkeinheit 34 weist ein nicht näher dargestelltes erstes Kugelgelenkelement und ein nicht näher dargestelltes zweites Kugelgelenkelement auf. Das erste Kugelgelenkelement ist als Kugelgelenkkopf ausgebildet. Das zweite Kugelgelenkelement ist als Kugelgelenkpfanne ausgebildet. Hierbei wäre das erste Axialverbindungselement 24 einteilig mit dem ersten Kugelgelenkelement ausgebildet. Des Weiteren wäre das zweite Axialverbindungselement 26 einteilig mit dem zweiten Kugelgelenkelement ausgebildet. Ferner können alternativ die Kugelgelenkpfanne und der Kugelgelenkkopf dem jeweilig anderen Element zugeordnet sein. Des Weiteren ist denkbar, dass die Querverbindungseinheit 16 zumindest teilweise von einer weiteren Kugelgelenkeinheit ausgebildet ist. Hierbei wäre das erste Querverbindungselement 40 einteilig mit einem ersten als Kugelgelenkkopf ausgebildeten Kugelgelenkelement ausgebildet. Des Weiteren wäre das zweite Querverbindungselement 42 einteilig mit dem zweiten als Kugelgelenkpfanne ausgebildeten Kugelgelenkelement ausgebildet.

Ferner ist denkbar, dass das erste Kugelgelenkelement einteilig mit dem Koppelelement 36 ausgebildet ist. Des Weiteren wäre hierbei das zweite Kugelgelenkelement als Gegenkoppelbereich 60 ausgebildet. Die Kugelgelenkeinheit 34 ist hierbei dazu vorgesehen, das erste Axialverbindungselement 24 entgegen der zumindest im Wesentlichen parallel zu der Schwenkachse 14 verlaufenden Translationsbewegung relativ zu dem zweiten Axialverbindungselement 26 unabhängig von der Schwenkbewegung zu halten. Des Weiteren ist denkbar, dass das Schleifkontaktelement 28 an dem ersten Kugelgelenkelement angeordnet ist. Das zweite Kontaktelement wäre hierbei an dem zweiten Kugelgelenkelement angeordnet.

Ferner wäre alternativ denkbar, dass die zumindest eine Axialverbindungseinheit 18 anstatt und/oder zusätzlich zu dem Schleifkontaktelement 28 zwei Induktionselemente 30, 32 zu einer drahtlosen elektrischen Verbindung aufweist. Die zwei Induktionselemente 30, 32 sind als elektrische Spule ausgebildet. Die zwei Induktionselemente 30, 32 sind dazu vorgesehen, eine elektrische Energie drahtlos zu übertragen. Des Weiteren sind die zwei Induktionselemente 30, 32 dazu vorgesehen, die elektrische Energie von dem ersten Kabelelement 54 zu dem zweiten Kabelelement 56 drahtlos zu übertragen. Das erste Induktionselement 30 ist als ein Sender ausgebildet. Das erste Induktionselement 30 ist dazu vorgesehen, ein elektromagnetisches Wechselfeld zu erzeugen. Das erste Induktionselement 30 ist an dem ersten Axialverbindungselement 24 angeordnet. Das zweite Induktionselement 32 ist als ein Empfänger ausgebildet. Das zweite Induktionselement 32 ist dazu vorgesehen, eine Energie aus dem elektromagnetischen Wechselfeld zu entnehmen und in die elektrische Energie zu wandeln. Das zweite Induktionselement 32 ist an dem zweiten Axialverbindungselement 26 angeordnet.

## Patentansprüche

1. Wischervorrichtung, insbesondere Scheibenwischervorrichtung, mit einem Wischarmadapter (10), mit einem Wischblattadapter (12), der entlang einer Schwenkachse (14) des Wischarmadapters (10) mit dem Wischarmadapter (10) koppelbar ist, und mit zumindest einer elektrischen Axialverbindungseinheit (18), die durch eine Translationsbewegung des Wischblattadapters (12) relativ zum Wischarmadapter (10), insbesondere entlang der oder parallel zur Schwenkachse (14), verbindbar oder trennbar ist,
**gekennzeichnet, durch**
zumindest eine fluidische Querverbindungseinheit (16), die durch eine Schwenkbewegung des Wischblattadapters (12) relativ zum Wischarmadapter (10) um die Schwenkachse (14) verbindbar oder trennbar ist.

2. Wischervorrichtung nach Anspruch 1, **dadurch gekennzeichnet, dass** die zumindest eine Querverbindungseinheit (16) eine Querverbindungsachse (20) aufweist, die sich quer zu einer Axialverbindungsachse (22) der zumindest einen Axialverbindungseinheit (18) erstreckt.

3. Wischervorrichtung nach Anspruch 1 oder 2, **dadurch gekennzeichnet, dass** die zumindest eine Axialverbindungseinheit (18) zumindest zwei Axialverbindungselemente (24, 26) aufweist, die in einem verbundenen Zustand schwenkbar zueinander gelagert sind.

4. Wischervorrichtung nach einem der vorhergehenden Ansprüche, **dadurch gekennzeichnet, dass** die Axialverbindungseinheit (18) zumindest zwei Axialverbindungselemente (24, 26) aufweist, die in einem verbundenen Zustand unabhängig von der Schwenkbewegung des Wischblattadapters (12) relativ zum Wischarmadapter (10) um die Schwenkachse (14) einen elektrisch leitenden Kontakt aufweisen.

5. Wischervorrichtung nach einem der vorhergehenden Ansprüche, **dadurch gekennzeichnet, dass** die zumindest eine Axialverbindungseinheit (18) zumindest ein Schleifkontaktelement (28) aufweist.

6. Wischervorrichtung nach einem der vorhergehenden Ansprüche, **dadurch gekennzeichnet, dass** die zumindest eine Axialverbindungseinheit (18) zumindest zwei Induktionselemente (30, 32) zu einer drahtlosen elektrischen Verbindung aufweist.

7. Wischervorrichtung nach einem der vorhergehenden Ansprüche, **dadurch gekennzeichnet, dass** die zumindest eine Axialverbindungseinheit (18) zumindest eine Kugelgelenkeinheit (34) aufweist.

8. Wischervorrichtung nach einem der vorhergehenden Ansprüche, **dadurch gekennzeichnet, dass** die Axialverbindungseinheit (18) zumindest zwei Axialverbindungselemente (24, 26) und zumindest ein Koppelelement (36) aufweist, das dazu vorgesehen ist, eines der zumindest zwei Axialverbindungselemente (24, 26) entgegen einer zumindest im Wesentlichen parallel zu der Schwenkachse (14) verlaufenden Translationsbewegung relativ zu einem weiteren der zumindest zwei Axialverbindungselemente (24, 26), insbesondere unabhängig von der Schwenkbewegung, zu halten.

9. Wischervorrichtung nach einem der vorhergehenden Ansprüche, **dadurch gekennzeichnet, dass** die Axialverbindungseinheit (18) zumindest ein Axialverbindungselement (24) aufweist, das an einem die Schwenkachse (16) definierenden Schwenklagerelement (38), insbesondere einem Lagerbolzen, des Wischarmadapters (10) angeordnet ist, wobei die Querverbindungseinheit (16) zumindest ein Querverbindungselement (40, 42)aufweist, das in einer Richtung quer zur Schwenkachse (14) an dem Wischarmadapter (10) außerhalb eines Nahbereichs der Schwenkachse (14) angeordnet ist.

10. Scheibenwischersystem mit zumindest einem Wischarm (44), mit zumindest einem Wischblatt (46) und mit zumindest einer Wischervorrichtung (48) nach einem der Ansprüche 1 bis 9.

## Claims

1. Wiper device, in particular windscreen wiper device, having a wiper arm adapter (10), having a wiper blade adapter (12), which can be coupled to the wiper arm adapter (10) along a pivot axis (14) of the wiper arm adapter (10), and having at least one electrical axial connecting unit (18), which can be connected or separated by a translational movement of the wiper blade adapter (12) relative to the wiper arm adapter (10), in particular along or parallel to the pivot axis (14),
**characterized by**
at least one fluidic transverse connecting unit (16), which can be connected or separated by a pivoting movement of the wiper blade adapter (12) relative to the wiper arm adapter (10) about the pivot axis (14).

2. Wiper device according to Claim 1, **characterized in that** the at least one transverse connecting unit (16) has a transverse connecting axis (20) which extends transversely with respect to an axial connecting axis (22) of the at least one axial connecting unit (18).

3. Wiper device according to Claim 1 or 2, **characterized in that** the at least one axial connecting unit (18) has at least two axial connecting elements (24, 26), which are pivotably mounted with respect to one another in a connected state.

4. Wiper device according to any one of the preceding claims, **characterized in that** the axial connecting unit (18) has at least two axial connecting elements (24, 26), which in a connected state have an electrically conductive contact independently of the pivoting movement of the wiper blade adapter (12) relative to the wiper arm adapter (10) about the pivot axis (14).

5. Wiper device according to any one of the preceding claims,
**characterized in that** the at least one axial connecting unit (18) has at least one sliding contact element (28).

6. Wiper device according to any one of the preceding claims, **characterized in that** the at least one axial connecting unit (18) has at least two induction elements (30, 32) for a wireless electrical connection.

7. Wiper device according to any one of the preceding claims, **characterized in that** the at least one axial connecting unit (18) has at least one ball and socket unit (34).

8. Wiper device according to any one of the preceding claims, **characterized in that** the axial connecting unit (18) has at least two axial connecting elements (24, 26) and at least one coupling element (36), which is provided to hold one of the at least two axial connecting elements (24, 26) counter to a translational movement running at least substantially parallel to the pivot axis (14) relative to another of the at least two axial connecting elements (24, 26), in particular independently of the pivoting movement.

9. Wiper device according to any one of the preceding claims, **characterized in that** the axial connecting unit (18) has at least one axial connecting element (24), which is arranged on a pivot bearing element (38) defining the pivot axis (16), in particular a bearing bolt, of the wiper arm adapter (10), wherein the transverse connecting unit (16) has at least one transverse connecting element (40, 42), which is arranged on the wiper arm adapter (10) outside an immediate vicinity of the pivot axis (14) in a direction transverse with respect to the pivot axis (14).

10. Windscreen wiper system having at least one wiper arm (44), having at least one wiper blade (46) and having at least one wiper device (48) according to one of Claims 1 to 9.

## Revendications

1. Dispositif d'essuie-glace, en particulier dispositif d'essuie-glace de pare-brise, comprenant un adaptateur de bras d'essuie-glace (10), un adaptateur de balai d'essuie-glace (12) qui peut être couplé à l'adaptateur de bras d'essuie-glace (10) le long d'un axe de pivotement (14) de l'adaptateur de bras d'essuie-glace (10), et au moins une unité de connexion axiale électrique (18) qui peut être connectée ou déconnectée par un mouvement de translation de l'adaptateur de balai d'essuie-glace (12) par rapport à l'adaptateur de bras d'essuie-glace (10), en particulier le long de l'axe de pivotement (14) ou en parallèle à celui-ci,
**caractérisé par**
au moins une unité de connexion transversale fluidique (16) qui peut être connectée ou déconnectée par un mouvement de pivotement de l'adaptateur de balai d'essuie-glace (12) par rapport à l'adaptateur de bras d'essuie-glace (10) autour de l'axe de pivotement (14).

2. Dispositif d'essuie-glace selon la revendication 1, **caractérisé en ce que** ladite au moins une unité de connexion transversale (16) présente un axe de connexion transversale (20) qui s'étend transversalement à un axe de connexion axiale (22) de ladite au moins une unité de connexion axiale (18).

3. Dispositif d'essuie-glace selon la revendication 1 ou 2, **caractérisé en ce que** ladite au moins une unité de connexion axiale (18) présente au moins deux éléments de connexion axiale (24, 26) qui sont montés en pivotement l'un par rapport à l'autre dans un état connecté.

4. Dispositif d'essuie-glace selon l'une quelconque des revendications précédentes, **caractérisé en ce que** l'unité de connexion axiale (18) présente au moins deux éléments de connexion axiale (24, 26) qui présentent dans un état connecté un contact électriquement conducteur indépendamment du mouvement de pivotement de l'adaptateur de balai d'essuie-glace (12) par rapport à l'adaptateur de bras d'essuie-glace (10) autour de l'axe de pivotement (14).

5. Dispositif d'essuie-glace selon l'une quelconque des revendications précédentes, **caractérisé**
**en ce que** ladite au moins une unité de connexion axiale (18) présente au moins un élément de contact par frottement (28).

6. Dispositif d'essuie-glace selon l'une quelconque des revendications précédentes, **caractérisé en ce que** ladite au moins une unité de connexion axiale (18) présente au moins deux éléments inductifs (30, 32) pour une connexion électrique sans fil.

7. Dispositif d'essuie-glace selon l'une quelconque des revendications précédentes, **caractérisé en ce que** ladite au moins une unité de connexion axiale (18) présente au moins une unité d'articulation sphérique (34).

8. Dispositif d'essuie-glace selon l'une quelconque des revendications précédentes, **caractérisé en ce que** l'unité de connexion axiale (18) présente au moins deux éléments de connexion axiale (24, 26) et au moins un élément de couplage (36) qui est prévu pour maintenir l'un des au moins deux éléments de connexion axiale (24, 26) contre un mouvement de translation passant au moins substantiellement en parallèle à l'axe de pivotement (14) par rapport à un autre des au moins deux éléments de connexion axiale (24, 26), en particulier indépendamment du mouvement de pivotement.

9. Dispositif d'essuie-glace selon l'une quelconque des revendications précédentes, **caractérisé en ce que** l'unité de connexion axiale (18) présente au moins un élément de connexion axiale (24) qui est disposé au niveau d'un élément de palier pivotant (38) définissant l'axe de pivotement (16), en particulier un axe de palier, de l'adaptateur de bras d'essuie-glace (10), dans lequel l'unité de connexion transversale (16) présente au moins un élément de connexion transversale (40, 42) qui est disposé dans une direction transversale à l'axe de pivotement (14) au niveau de l'adaptateur de bras d'essuie-glace (10) à l'extérieur d'une zone proche de l'axe de pivotement (14).

10. Système d'essuie-glace, comprenant au moins un bras d'essuie-glace (44), au moins un balai d'essuie-glace (46) et au moins un dispositif d'essuie-glace (48) selon l'une quelconque des revendications 1 à 9.
